# EUROPEAN PATENT SPECIFICATION

(11) **EP 2 746 020 B1**
(45) Date of publication and mention of the grant of the patent: **15.12.2021**
(21) Application number: 13195628.6
(22) Date of filing: 20.10.2010
(51) Int. Cl.: B29C 33/02, B29C 33/04, B29C 33/30, B29C 35/02, B29C 35/00, B29C 37/00

(54) **Zone control of tool temperature**
Zonensteuerung von Werkzeugtemperatur
Température d'outils de commande de zone

(30) Priority: 20.10.2009 GB 0918362
(43) Date of publication of application: 25.06.2014
(62) Divisional of application: 10773665.4
(73) Proprietor: Surface Generation Limited, Oakham, Rutland LE15 8TW (GB)
(72) Inventor: Halford, Ben, Oakham, Rutland LE15 8NQ (GB)
(74) Representative: Sanger, Phillip Simon

(56) References cited:
- US-A- 3 763 293
- US-A- 4 217 325
- US-A1- 2006 051 451
- None

## Description

This invention related to a heated tooling system, in particular to a heated tooling system for increased control of material properties of an article made in said tooling system.

Many materials are moulded using a variety of moulding tools. It is well known in some industries, for example in the metal casting industry, that the rate and temperature at which a material solidifies affects the material properties of the article. This effect usually takes place on a microscopic scale and may for example include such characteristics as the proportion of amorphosity or crystallinity in the final product. When materials such as metals are used, the article can be treated after it comes off the tool or mould, for example by heat treating and quenching, to control the material properties, however these processes are lengthy and increase production time and cost.

When polymer materials are moulded, in particular thermosetting resins, which may also contain a filler, the finished article can not usually be treated by a secondary process to control its structural properties after it comes off the tool. Some tools may be maintained in a temperature controlled environment, for example an autoclave, to regulate the overall tool surface temperature and this can be effective for articles with a relatively thin and constant cross sectional area.

When using tools to produce articles that have a thick or, in particular, a variable thickness the problems associated with variance in material properties of the finished product are further compounded by variance in heat loss from the different thickness sections.

When thermosetting resins are used further complications arise by virtue of the exothermic nature of the process of curing/cross linking. The temperature of the curing thermoset polymer is a product of not only the tool temperature, but also of the local reaction rate and the ability for heat to escape from the area in which the reaction is occurring. The result of this is that the thermosetting polymer will cure at different rates at different points across its profile resulting in different material properties derived from the differing molecular structure.

Metals and thermoplastic polymers will experience different crystallinities in areas of different thickness as the cooling rate will vary dependant on heat extraction. Autoclaves can be used to control this but, in order to overcome the differences due to different cooling speeds of thick and thin parts of an article generally very gradual cooling is used which increases production time. Furthermore autoclaves are notoriously energy inefficient and require large areas to accommodate their footprint which is typically much larger then the actual tool for the article.

Even though the different material properties arising from current tooling systems may, to some extent, be predictable it is not controllable. In many instances, the design of articles, in particular those to be moulded out of thermosetting polymers, is compromised between an ideal design and a design that is practical to process. In particular where an ideal solution for a part would comprise a single large article having sections of different thickness, several smaller articles, each having a more uniform thickness, may be manufactured and assembled together so as to obtain better control over the material properties of each section of the article.

A further problem with current moulding techniques, and particularly associated with autoclaves is that they are not controllable so as to vary the material properties of the articles they produce. For example if a thermoplastic, e.g. PEEK, part of varying thickness were required that had thicker sections required to have a high crystallinity to impart strength and thinner sections having a lower crystallinity to impart flexibility, then current technologies are not effective in creating such a part in a single moulding process.

The present invention at least partially mitigates the above mentioned problems with known tooling processes.

Document US-A-3 763 293 discloses a tool system for moulding an article according to the preamble of claim 1 and a method of manufacturing an article according to the preamble of claim 9.

According to a first aspect of the invention there is provided a tool system according to claim 1.

By continuously being able to locally heat and/or cool the tool zones and thereby control the heat transfer into and out of the article within the tool the material properties of the finished article can be controlled during the moulding process.

In a preferred embodiment the tool system further comprises a plurality of sensors to sense a property of the article within the tool zones and producing signals indicative of said property.

The control system has an input means that receives said signal indicative of said property and the control system controls the heating and cooling means in response to said signal to heat or cool said tool zones. The sensed property may be one of: temperature, dielectric constant, strain, ultrasonic penetration and hardness or any other suitable parameter that can be used to indicate the cure rate of the polymer. In this manner the material property can be controlled with direct feedback throughout the moulding process. The sensor may measure the property indirectly, for example by measuring temperature, the sensed temperature being indicative of a material property, e.g. crystallinity which develops at different rates dependant on temperature, or may measure the property more directly using such means a dielectric constant which is proportional to, for example, crystallinity. By controlling the heating and/or cooling dependant on these properties allows a finished article with known properties to be moulded and the independent control of these properties within different zones of the tool enable a article to be moulded having required different material properties repeatably produced to a specification in different areas of the article.

An example of such a product may be a nose cone moulding for a racing car. The sides of the cone will be required to be thin and highly rigid so as to control the airflow thereover with minimal reinforcement and will therefore require a high level of crystallinity in the material structure. The nose of the cone however will be required to be less brittle and be able to be struck by small objects, for example stone chips thrown up by another car, without shattering. The nose part of the cone will therefore require more amorphisity and therefore be less brittle and more able to withstand such an impact.

According to an embodiment of the invention some tooling pins have heating means associated therewith and other tooling pins have cooling means associated therewith.

Each heated/cooled tool zone has an independent in-line heater associated therewith, which may comprise an internal channel in each tool zone below the tools surface through which a heating/cooling fluid is passed. The system may also comprise at least one reservoir for a heating and/or cooling fluid.

The system further comprises a plurality of fluid flow paths to direct flow of said heating/cooling fluid to individual tool pins. Each flow path has an in-line heater therein for heating fluid passing therethrough.

The tool system may comprise return fluid flow paths to return said heating/cooling fluid from said tool pins to a reservoir and may comprise a plurality of said reservoirs, each reservoir containing heating/cooling fluid which may be maintained at a different temperature. In this manner a single heater/cooler may be associated with each reservoir rather than with each heated/cooled tool pin, there by reducing the number of heaters/coolers needed. The cooled tool pins may be cooled by ambient temperature air and therefore may not need physical apparatus to cool the cooling fluid. Where ambient air is used for cooling purposes it would not be recycled back to the reservoir but would be vented to atmosphere.

Activation of the inline heater changes the fluid from a cooling fluid to a heating fluid.

In a preferred arrangement the tool system comprises a plurality of active tool zones having heating and cooling means associated therewith, and a plurality of passive tool zones containing no heating and cooling means associated therewith, the passive tool zones adjacent to and/or interspaced with the active tool zones.

In an alternative embodiment the tool system comprises a plurality of heated tool zones and a plurality of cooled tool zones, the cooled tool zones being interspaced between the heated tool zones. In this manner tool zones that are not directly heated/cooled (the passive tool zones) are indirectly heated/cooled by heat transfer with adjacent directly heated/cooled tool zones.

The heated zones, cooled zones or the passive zones may have sensors associated therewith which form part of the control circuitry. In particular sensors on the passive zones allow the temperature transfer into the article in these zones to be closely monitored and controlled through heat transfer with adjacent heated zones.

In a preferred embodiment the tooling system comprises a plurality of tool pins that tessellate to form the tool surface and wherein at least some of the tool pins have fluid channels therein through which heating /cooling fluid passes.

The heated tool pins may have an internal in-line fluid heater for heating fluid passing through the tool pin. In one arrangement the tool pins through which heating/cooling fluid passes contain an insert that defines at least part of the fluid flow path. The insert may be removable/interchangeable and different fluid flow paths in the insert will increase or decrease the residency time of the fluid passing therethrough and/or alter the distance between the heating/cooling fluid and the tool surface. In this way the heat transfer into the tool surface can be changed. Furthermore, common pins can be used and different inserts inserted to change the heat transfer for different tool zones

In one arrangement the tooling system further comprises a plurality of normally open control valves for controlling the flow of the heating/cooling fluid to the tool zones. In this way if there is a failure in the system the valves will fail open and unheated fluid will flow therethrough to reduce the tool temperature. The valves may be variable flow control valves or maybe bi-state or tri-state valves.

The system according may comprise a sensor or sensors for sensing a material property of said article material and supplying a signal indicative of said property to said controller prior to commencement of the moulding process, the controller adapted to modify the control of said heating and cooling means in response to said sensed material property. In this manner, prior to commencement of, or during, a moulding process parameters of the control of the process can be modified to take into consideration batch variance of the article material.

In a preferred embodiment the tooling system further comprising a second tool arranged substantially opposite the first tool which may be substantially the same as the first tool.

According to a second aspect of the invention there is provided a method of manufacturing an article according to claim 9.

The method may further comprise, sensing at least one property of the article at each tool zone and producing signals indicative of said property at each tool zone.

The method according may include said control system has receiving the signals indicative of said property and controlling the heating and cooling means in response to said signal to heat or cool said tool zones. Sensors, which may be temperature sensors, dielectric sensors, strain gauges, piezo sensors, ultrasonic sensors or hardness sensors sense the material property.

The method preferably further comprises moulding a sacrificial piece of article material in a sensing section and wherein said piece of article material in said sensing section has sensors embedded therein. Several sensors may be embedded within said sacrificial piece of article material at locations having different article material cross sectional areas and controlling the heating and cooling means of tool zones at a particular mould cross sectional areas in response to the signals generated by sensors at a corresponding cross sectional area.

In this manner sensors may be embedded within a piece of the article material to sense a material property, as it develops during the moulding process, in the middle of a moulding. The sensors may be embedded in cross sections of different area to enable an accurate signal of the changes in material property occurring within the moulding itself without needing to place sensors in the article. Of course, in some applications it may be possible to place the sensors in the article and leave them embedded therein when the article is removed from the tool.

A method preferably comprises regulating the heat transfer into and out of the article to produce, within a predetermined tolerance, specific material properties in the finished article. Preferably the specific article material properties are individually controlled within specific tool zones. The specific material property may be one of: density crystallinity/amorphisity, crystal size, cross-link ratio and vulcanisation.

In one embodiment the method comprise sensing a material property of said article material prior to commencement of the moulding process and supplying a signal indicative of said property to said controller prior to commencement of the moulding process, the controller modifies the control of said heating and cooling means during the moulding process in response to said material property sensed prior to commencement of the moulding process. In this manner the control can be modified to take into consideration differences material properties between batches of material.

In another embodiment the article is manufactured by resin transfer moulding and the tool zones are sequentially heated from the point of resin injection in the direction of resin flow so as to elevate the mould temperature as the leading edge of the resin flow passes there over thereby reducing the viscosity of the resin at the resin/perform interface as it flows into the tool. The tool zones can be heated prior to the leading edge of the resin flow arriving there in a manner that when the resin passes the tool zone the tool surface temperature has already peaked and is starting to cool.

The tool zones may be user defined or may be automatically defined by the system. In one embodiment the controller of the system monitors the performance of the tool zones and if it is not possible for the controller to heat the tool zones to the required temperatures then it may redefine the tool zones. If for example the performance of one heater was to reduce due to malfunction, the tool zones could be redefined to include another heater within the same tool zone as the underperforming heater.

Where multiple heaters are used they are preferably split between different phases of a three phase electric supply. Furthermore the controller controls the use of the heaters to ensure that a situation does not occur when a significantly unbalanced power draw is placed on any one single phase of the electricity. This may, for example include using heaters when they are not strictly needed. For example when a zone is desired to be cooled the heater associated with it could be periodically pulsed to place a small load on its electricity phase. As the fluid flow will still be below the temperature of the tool cooling will still occur albeit at a slower rate on account of the slightly increased temperature due to the pulsing of the heater. Such methods can assist in balancing the electricity supply used in the invention.

To assist in the balancing of the current the tooling system may be provided with two different levels of cooling, for example by switching between a high coolant flow and a low coolant flow. The high coolant flow could be used when extreme cooling is needed or could be used in combination with the use of the heaters as described above to effect cooling when the heaters are powered or partially powered without loosing cooling power compared to the lower normal coolant flow rate.

Specific embodiments of the invention will now be described, by way of example, with reference to the following drawings in which:
Figures 1 and 2 shows a tool of a tool system according to the first aspect of the invention;
Figure 3 shows a section through a tool pin for use in the tool system;
Figure 4 shows a tool system in accordance with the invention;
Figure 5 shows an alternative tool system in accordance with the invention;
Figure 6 shows a control system in accordance with the invention;
Figure 7 shows a first temperature profile in accordance with the invention;
Figure 8 shows a second temperature profile in accordance with the invention;
Figure 9 shows a cross section through a tool of a system in accordance with the invention;
Figure 10 shows a schematic diagram of an embodiment of tool system in accordance with the invention; and
Figures 11 and 12 show cross sections through tool pins used in the tool system of the invention.

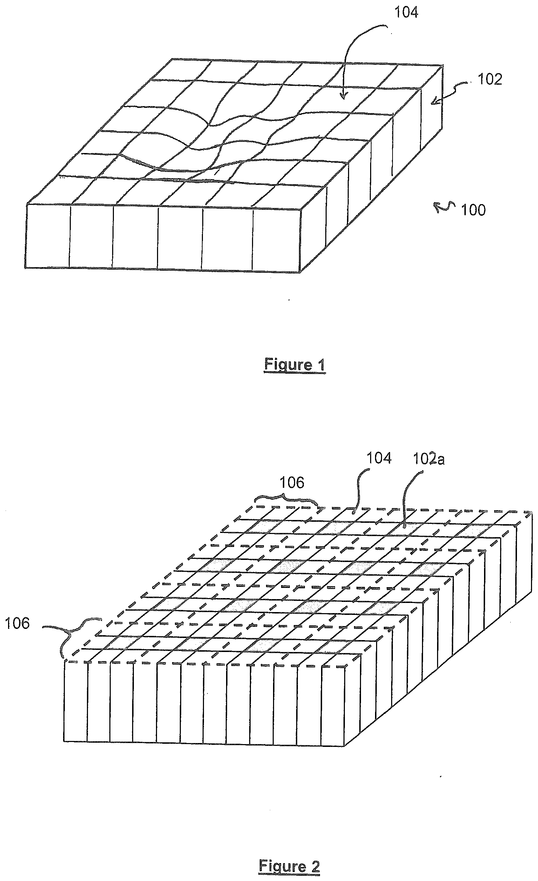

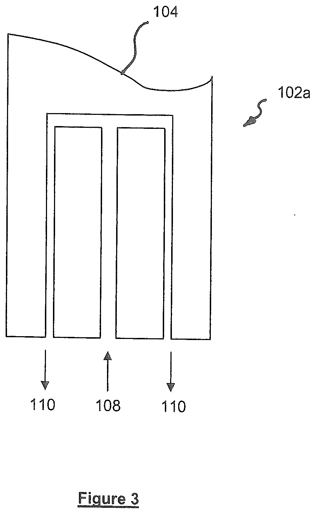

Referring to Figures 1 and 2 a tool 100 is shown comprising a plurality of tool pins 102 each having a surface 104 on a tool face which may be flat or which may have a contoured surface. The tool surface is divided into a plurality of tool zones 106, each zone comprising one or more tool pins. In the example shown in Figure 2 each zone 106 is a 3x3 array of tool pins 102. The tool surface 104 of figure 2 is shown as being flat for illustration purposes only and would, in use, have a contoured/shaped tool surface. Each tool zone 106 has at least one heated/cooled pin 102a (see Figure 3) associated therewith. The heated/cooled pin may be a single pin or where, each tool zone 106 comprises more than one tool pin 102, separate heated and cooled pins can be used. By controlling the application of heat and cooling to the tool zones 106 the transfer of energy into and out of an article being made in the tool 100 can be locally controlled at specific times during the moulding process. As is well documented the temperature and speed at which materials solidify effects various material properties, for example, amorphisity, crystallinity, hardness, impact resistance etc. Therefore, by carefully controlling the flow of heat into and out of an article during the moulding process the material properties of the finished article can be controlled. In some instances control may be required to ensure that an article has constant material properties and in other instances it may be desirable to create an article out of a single material having different properties in different areas of the article. The number of tool pins 102 in a tool zone 106 will depend on the finesse of control needed. Where great control of localised temperature is needed each tool zone 106 may comprise a single heated/cooled pin 102a. In an alternative arrangement, not shown, the tool may comprise a number of actively heated and cooled tool zones having heated/cooled pins 102a therein and a plurality of passively heated/cooled tool zones that are heated/cooled by heat transfer with adjacent actively heated/cooled tool zones.

For a given tool the heat zones may be defined by the user when designing the tool or may, for example, be automatically assigned by the controller. The Controller may redefine the zones during the moulding process. This could, for example as a result of the moulding process, or could be due to the mould not achieving the temperatures desired from the controller. In the first instance if, during for example a resin transfer moulding process, resin is injected from one end of the mould then it may be desirous to heat the tool progressively in bands starting at the point of entry to ensure that as the leading edge of the resin being injected is wetting and impregnating the perform material, it is heated to reduce its viscosity enabling it to flow better. Once the material is fully injected the zones may be redefined for example to give different areas of the part different materials properties. Alternatively, if for example one of the heaters broke and was unable to provide heating to one zone, that zone may be split and attached to the adjacent zones so as to maintain control (albeit possibly to a lesser degree of finesse) of the tool surface temperature in that zone.

In use the tool pins would be surrounded by a bolster which is not shown. The bolster securely clamps all the pins together. The bolster may also be heated to the same temperature as the pins adjacent it such that as the pins expand and contract with the heating and cooling, so too does the bolster. The entire bolster may be heated and cooled, or alternatively, just the corners of the bolster may be heated/cooled.

Referring to Figure 3 an example of a heated/cooled pin 102a is shown. The tool pin has a contoured surface 104 for, in use, forming an article. The tool pin 102a has an inlet 108 for supplying cooling/heating fluid to the pin 102a and an outlet 110 for removing used heating/cooling fluid from the pin 102a.

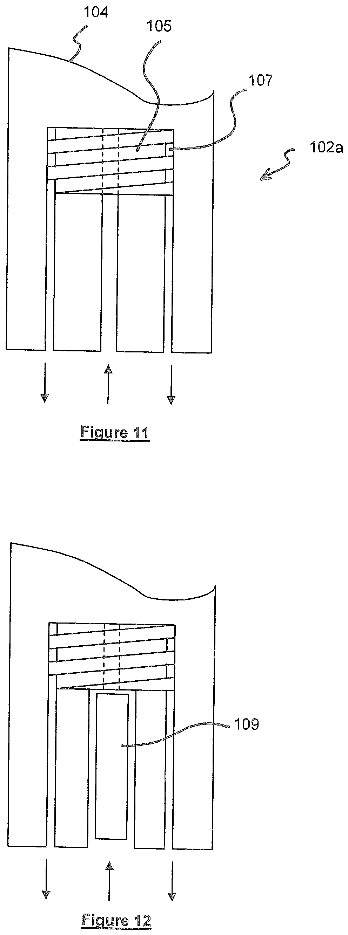

Figure 11 shows a variation of the tool pin 102b of Figure 3. In this embodiment a heat exchange insert 105 is placed in the pin adjacent the end of the pin forming the tool surface 104. The insert has a fluid flow path 107 (in this case in the form of a helix around its outer edge, to increase the residence time of the heated fluid in the area of the pin adjacent the tool surface to enable more heat to be extracted from the fluid. This increased flow path length enables improved heat transfer. Different inserts 105 with different flow paths can be used in the pins to manage the heat transfer at different pins. This enables the pins 102a to be standardised and the overall tool system to then be customised to obtain the required heat transfer characteristics in the correct areas of the tool.

Figure 12 shows a further embodiment of the tool pin wherein the tool pins are provided with an internal heater 109 that heats the fluid as it passes into the tool pin and as it approached the tool surface. The heater may be used with the tool pin of Figure 11 or may be used with the tool pin of Figure 3, i.e. with or without the insert 105.

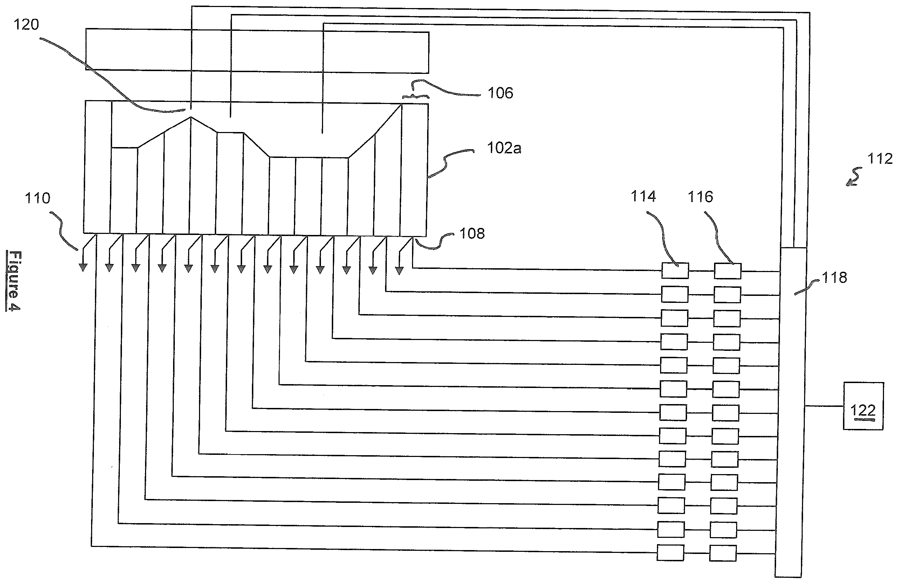

Referring to Figure 4 shows a tool system 112 is shown in accordance with the invention. Each tool zone 106 has an individual blown air heater 114 associated therewith. When operational the heaters 114 heat air which is than enters the pin 102a, via inlet 108, circulates in the pin, thereby heating/cooling the pin, and then exits via exits 1 10 and is vented to atmosphere. Each heater 114 has a local controller 1 16 associated therewith, which may be a PID controller or a similar controller, for controlling the heaters 114 to produce the required heat exchange with the article in the tool. A master controller 1 18 receives signals from sensors 120 in the tool which sense material properties of the article as it solidifies, and controls the local controllers in response to said received signals. The sensors may for example be dielectric sensors and, although some are omitted for clarity, sensors can be provided for every zone of the tool. The master controller 118 has a data input means 122 by which a user can input a required heating/cooling sequence for the tool zones 106. The data input means 122 may be an interactive means by which the user can directly input and save control commands and sequences or may simply comprise a data port/ wireless receiver etc by which the controller can receive a machine readable control program generated externally from the tool system. By having separate heaters for each tool zone, in the event of a failure of one of the heaters the heat supplied by adjacent heated pins 102a can be modified to ensure that a satisfactory article is produced. As this enables the tool system to function, even in the event of component failure, efficiency may be increased as a result of reduced unplanned downtime as component failures can be made during normal tool down time.

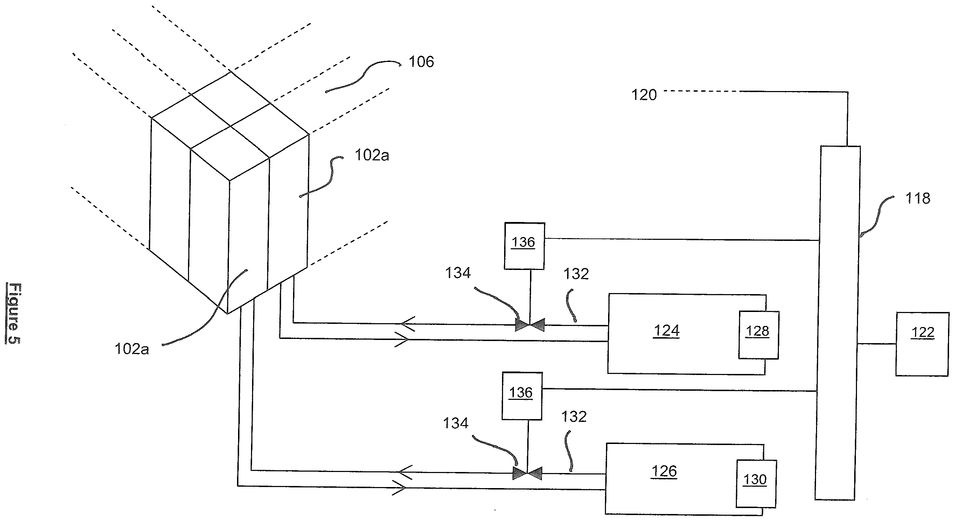

Referring to Figure 5 an alternative tool system is shown. Each tool zone 106 has at least one heated/cooled pin 102a associated therewith. The heated/cooled pins 102a may be a single common pin or may, as shown, be two separate pins. The system comprises two reservoirs 124, 126, one of which is heated and the other is cooled by heating /cooling means 128, 130 and each reservoir is connected to a plurality of tool zones via valved conduits 132. The valves 134 are controlled by local controllers 136 which in turn are controlled by a master controller 1 18. Operation of the system is largely the same as that described above in that the master controller controls the local controllers dependant on signals received from sensors 120 (not shown). Return conduits return fluid from the heated/cooled pins to the reservoirs. In this way a closed loop heating and cooling system is used to increase the overall efficiency of the heating/cooling circuits. Furthermore a single reservoir can serve a number of, or all of, the tool zones.

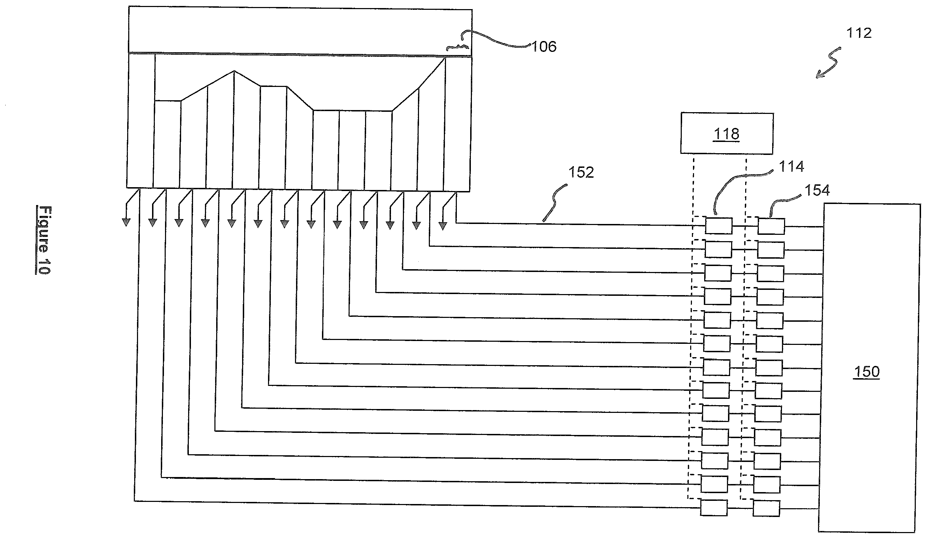

Figure 10 shows a different arrangement wherein tool system is provided with a reservoir 150 of compressed fluid, preferably air, that supplies a plurality of conduits 152 that carry the fluid to the tool zones 106 of the tool system 1 12. Each conduit 152 has an inline heater 114 associated therewith that is controlled buy a controller 1 18. Although depicted as a single item the use of the word controller here is generic and it will be appreciated that the controller may include different levels of controller as described herein. Each conduit also has a flow control valve 154 associated therewith which may be a continuously variable valve or may have preset flow rates. The valve may for example be a tri state valve having a shut, a half open, and a fully open position.

The valves 154 are fail open valves so that in the event of a loss of power full flow is provided through the tool and the heaters are off, thereby cooling the tool and removing an residual or chemically produced heat. The heaters 114 may alternatively be placed in the fluid path within each tool zone, i.e. within the tool pins of a tool zone.

Different heating and cooling fluids can be used dependant on the temperatures required. Heating fluids may include heated air, water and oil and cooling fluids may include cooled or ambient temperature air, water, water/glycol mixture and refrigerant gasses, for example the cooling circuit could be a traditional compression/expansion cooling circuit.

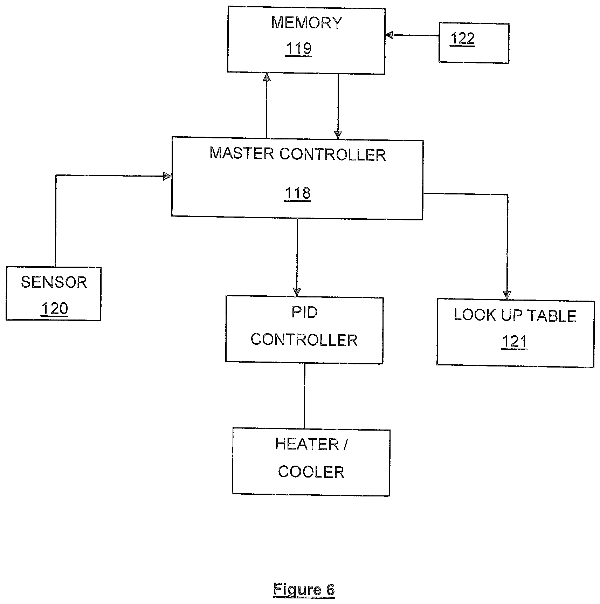

Referring to Figure 6 a schematic diagram of the control of a tool system is shown. A Master controller 118 receives control signals from a memory 119 pertaining to the general control of the system. This may, for example, be a time against temperature plot for each tool zone detailed to give desired material characteristics in the finished article. The master controller 18 receives signals from at least one sensor 120 that is sensing, in real time, certain material properties of the article. There may for example be the article temperature, the article dielectric constant or the article density, the strain on the article or the absorption of energy, e.g. ultrasound, by the article.

There would usually be more than one sensor associated with the article, for example if different areas of the article need different final material properties then it is beneficial to have a sensor 120 associated with each area of different required material property. The received signals are stored in a database of historical data for future reference. The master controller 118 compares the current signal from the sensor to the required signal and can send an input signal to the local controller 116 to amend the temperature of the pin 102a associated therewith. In addition the master controller 118 can identify patterns in the incoming data and compare these to historical data stored by the master controller 118 in and can thus identify patterns in the heating/cooling for any particular article. Even in a controlled situation the heating and cooling of the article may vary from day to day as a function of the materials being used. For example in thermosetting resins the speed of the hardening of the resin will depend on the exact constitution, the ambient temperature, the amount of time it has been mixed prior to use etc. By comparing the trends for the current article to historical data the master controller 118 can identify early on if the article temperature is likely to go out of specific tolerances and can modify the figures in the look up table 121 that the local controller 114 uses to increase or reduce the heating profile for specific tool pins 102a.

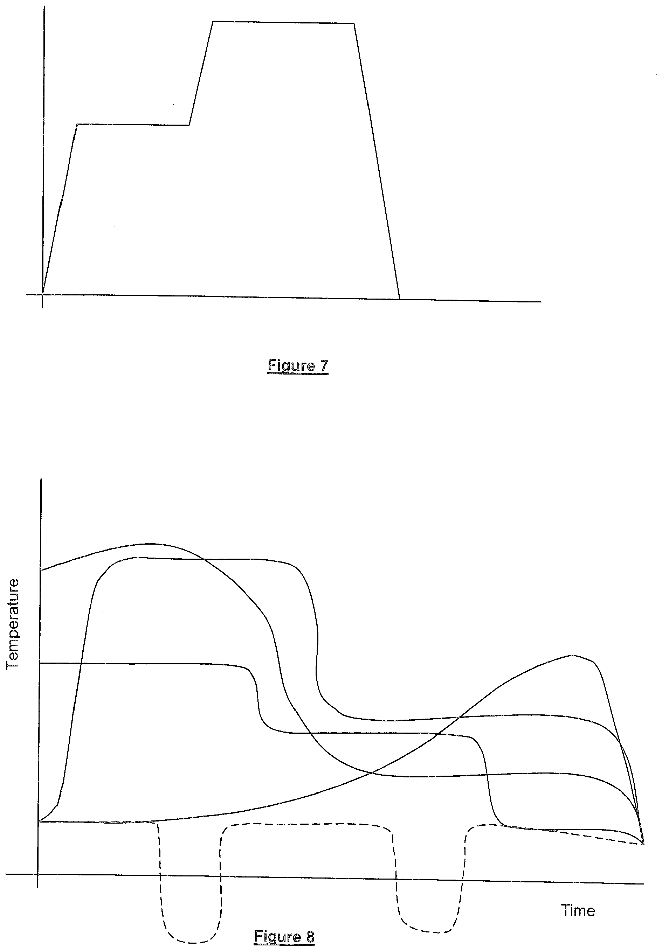

Referring to Figure 7 a simple temperature profile is shown for moulding a thermosetting impregnated article blank. The tool pin temperature is first quickly raised to 85 degrees by passing heated fluid (for example water) through the tool pins of a tool 100 according to the invention. The temperature is then held at 85 degrees for 5 minutes in order for the blank impregnated with resin (a pre-preg) to consolidate. As the individual tool pins 102 in contact with the article or at least one tool pin 102a associated with a tool zone, is directly heated, heat can be quickly input into the article. After 5 minutes the temperature is once again raised, this time to 120 degrees in order for the polymer to cross link. After a predetermined time limit, or after a pre determined signal is received from a sensor, the tool pins are quickly cooled by passing a cooling fluid through the pin bodies. Once again, passing the cooling fluid directly through the tool pin 102a results in a quick temperature reduction and quickly cools the tool at the end of the process thereby minimising the cycle time. As the temperature has been carefully controlled through out the process, not only is a shorter time required, but consistent material properties are achieved in the finished article. As the tool has multiple zones each of which can be independently temperature controlled then each zone may have a profile and be controlled in the same manner as a single zone.

Referring to Figure 8 a more complicated control profile is shown for a tool system having 5 tool zones, each tool zone requiring a different heating cooling profile over time. The cooling means may include refrigerants to enable cooling of the tool pins below ambient temperature (see dotted line). One advantage of this is that specific areas of the article can be maintained at specific temperatures during the moulding process. For example if a moulding was being made with a specific insert that requires to be maintained below a specific temperature to prevent damage, e.g. a sensor or piece of electronics that will become and integral functional part of the article then the region of the article in which this insert is located can be maintained at a temperature that ensures the continued integrity of the sensor/electronics. Other parts of the article can be heated to a greater temperature to produce, for example, higher levels of cross linking in the polymer. Such control during moulding is not, for example, possible using an autoclave.

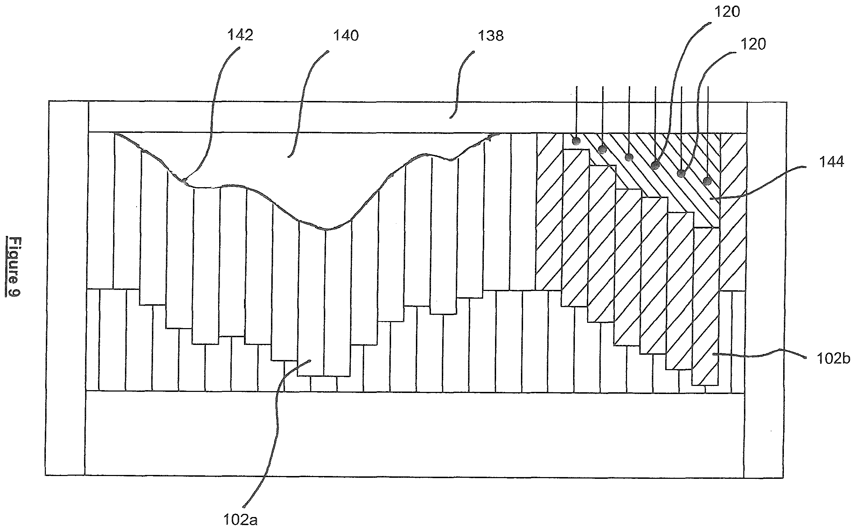

Figure 9 shows a tool system having a plurality of heated tool pins 102a which come together with a tool upper plate 138 to form an article cavity 1 0. The pins 102a have a complex contoured surface 142. In a separate area of the tool a sensor cavity 144 is formed between a series of tool pins 102b and the tool upper plate 138. The tool pins 102b are arranged at regular heights and sensors 120 are located at predefined depths in the sensor cavity 144. During the moulding process material from the same batch as being used for the article is introduced into the sensor cavity 144 at the same time as it is introduced to the article cavity 140. The article material may, for example be a cross linked expanded polymer material. As the article material solidifies data collected from sensors 120 in the sensor cavity 144 is used to control the flow of heat to and from the pins 102a of the article cavity 140. Data from the sensors 120 is taken at a series of depths in the article material and is used to control heat to pins 102a that correspond to similar depths of article material in the article cavity. In this way real time data can be used from within the middle of the article material without the need to corrupt the integrity of the article as any sensors 120 that were placed within the actual article would remain there once the article had solidified. Once the process is finished the material from the sensor cavity 144 is discarded along with the sensors 120 therein. In extreme cases where very high levels of control are used a twin tool can be made wherein two identical article cavities are made alongside one another, both of which are controlled in an identical manner with heated tool pins 102a. One of the article cavities forms a sacrificial sensing article and the other article is the produced item. In this way the best possible replication of the internal conditions of the article are achieved. It will be appreciated however that where it is acceptable to have small foreign objects embedded in the finished part that the sensors may be embedded in the article material during the moulding process and be left in the article after the process is complete.

It will be appreciated that although the invention has been described in relation to a single tool face in many applications a tool with two tool faces will be used and that an upper tool face according to this invention may also be used in combination with a lower tool face to provide active heating and cooling from both sides of the tool.

The invention may be used with any suitable fluid and may include recycling the fluid (especially if a liquid) and/or heat recovery from the returning fluid.

The invention is described with reference to a tool comprising a plurality of tool pins, however it will be appreciated by the skilled person that although the tool pin construction is particularly advantageous in allowing modular construction, the tool could be made using a continuous tool surface and the heating/cooling achieved by attaching heating and cooling to the reverse tool surface and that accordingly the invention is not limited to tools of the pin type. Equally the joints of the pins may be welded together to provide a continuous tool surface. The tool surface may be finish machined after welding to machine it to final tolerance.

Tooling system having only heated or only cooled pins are also within the scope of the invention and will be applicable to some situations and will deliver many of the benefits associated with heated and cooled tool pins.

## Claims

1. A tool system (100) for moulding an article, the system comprising:
a tool having a tool surface (104) for forming an article, the tool surface comprising a plurality of tool zones (106);
a plurality of fluid flow paths to direct the flow of a heating/cooling fluid to individual tool zones,
heating and cooling means; and
control means (116) adapted to control the heating and cooling means,
**characterised in that**:
the heating and cooling means are independently associated with at least some of said tool zones, and comprise an inline heater (114);
and **in that** the control means (116) is configured to control the heating and cooling means to selectively:
individually heat the tool zones (106) by activating the inline heaters; and,
individually cool the tool zones (106);
to regulate the heat transfer into and out of the article at each tool zone at any particular time throughout the moulding process.

2. A tool system (100) as claimed in claim 1 further comprising a plurality of sensors (12) to sense a property of the article within the tool zones and producing signals indicative of said property at each tool zone.

3. A tool system (100) as claimed in claim 2 wherein said control system has an input means (122) that receives said signals indicative of said property and, based on said signals said control system controls the heating and cooling means dependant on programmed criteria to heat or cool said tool zones.

4. A tool system (100) according to any one of claims 2 to 3 wherein the sensors (120) sense one of: temperature, dielectric constant, ultrasonic absorption/transmission, strain and hardness.

5. A tooling system (100) according to any preceding claim further comprising a plurality of normally open control valves (134) for controlling the flow of the heating/cooling fluid to the tool zones.

6. A tooling system (100) according to claim 5 wherein the valves (134) are variable flow control valves.

7. A tooling system (100) according to any preceding claim further comprising a second tool arranged substantially opposite the first tool.

8. A tooling system (100) according to claim 7 wherein the second tool is substantially the same as the first tool.

9. A method of manufacturing an article comprising:
placing a material to be moulded in a tool (100) having a tool surface (104) for forming an article, the tool surface comprising a plurality of tool zones (106) and a plurality of fluid flow paths to direct the flow of a heating/cooling fluid to individual tool zones;
activating heating and cooling means associated with at least some of said tool zones so as to vary the tool surface temperature of each tool zone;
**characterised in that**:
the heating and cooling means comprise an inline heater (114) for heating fluid passing through the respective fluid flow path, the heaters being independently associated with the flow path of at least some of said tool zones (106), and;
the method comprises the step of actively controlling the heating and cooling means (114) to regulate the heat transfer into and out of the article at each tool zone (106) at any particular time throughout the moulding process, the heating being controlled by selectively activating the inline heaters.

10. The method according to claim 9 further comprising:
sensing a property of the article at each tool zone and producing signals indicative of said sensed property at each tool zone.

11. A method according to claim 10 wherein said control system receives said signals indicative of said property and controls the heating and cooling means in response to said signal to heat or cool said tool zones.

12. A method according to according to claim 10 or claim 11 wherein the sensed property is one of: temperature, dielectric constant and hardness.

13. A method according to any one of claims 9 to 12 comprising regulating the heat transfer into and out of the article to produce, within a predetermined tolerance, specific material properties in the finished article.

14. A method according to claim 13 wherein the specific article material properties are individually controlled within specific tool zones (106).

15. A method according to any one of claims 9 to 14 further comprising providing a sensor (120) for sensing a material property of said article material prior to commencement of the moulding process and supplying a signal indicative of said property to said controller prior to commencement of the moulding process, and wherein the controller modifies the control of said heating and cooling means during the moulding process in response to said material property sensed prior to commencement of the moulding process.

## Patentansprüche

1. Werkzeugsystem (100) zum Formen eines Artikels, wobei das System umfasst:
ein Werkzeug mit einer Werkzeugoberfläche (104) zum Formen eines Artikels, wobei die Werkzeugoberfläche eine Vielzahl von Werkzeugzonen (106) umfasst;
eine Vielzahl von Fluidströmungswegen, um den Strom eines Heiz-/Kühlfluids zu einzelnen Werkzeugzonen zu leiten,
Heiz- und Kühleinrichtungen; und
Steuerungsmittel (116), die geeignet sind, die Heiz- und Kühleinrichtungen zu steuern,
**dadurch gekennzeichnet, dass**:
die Heiz- und Kühleinrichtungen unabhängig mindestens einigen der Werkzeugzonen zugeordnet sind und ein Inline-Heizelement (114) umfassen;
und dass das Steuerungsmittel (116) dafür ausgelegt ist, die Heiz- und Kühleinrichtungen zu steuern, um selektiv:
die Werkzeugzonen (106) individuell durch Aktivieren der Inline-Heizelemente zu erwärmen; und
die Werkzeugzonen (106) individuell zu kühlen;
um die Wärmeübertragung in den und aus dem Artikel in jeder Werkzeugzone zu jedem bestimmten Zeitpunkt während des gesamten Formprozesses zu regulieren.

2. Werkzeugsystem (100) nach Anspruch 1, das weiterhin eine Vielzahl von Sensoren (12) umfasst, um eine Eigenschaft des Artikels innerhalb der Werkzeugzonen zu erfassen und Signale zu erzeugen, die diese Eigenschaft in jeder Werkzeugzone anzeigen.

3. Werkzeugsystem (100) nach Anspruch 2, wobei das Steuersystem eine Eingabeeinrichtung (122) aufweist, welche die die Eigenschaft anzeigenden Signale empfängt, und wobei auf der Grundlage der Signale das Steuersystem die Heiz- und Kühleinrichtungen in Abhängigkeit von programmierten Kriterien steuert, um die Werkzeugzonen zu erwärmen oder zu kühlen.

4. Werkzeugsystem (100) nach einem der Ansprüche 2 bis 3, wobei die Sensoren (120) eines der Folgenden erfassen: Temperatur, Dielektrizitätskonstante, Ultraschallabsorption/- übertragung, Dehnung und Härte.

5. Werkzeugsystem (100) nach einem der vorhergehenden Ansprüche, das ferner eine Vielzahl von normalerweise offenen Steuerventilen (134) zum Steuern des Stroms des Heiz-/Kühlfluids zu den Werkzeugzonen umfasst.

6. Werkzeugsystem (100) nach Anspruch 5, wobei die Ventile (134) variable Durchflusssteuerventile sind.

7. Werkzeugsystem (100) nach einem der vorhergehenden Ansprüche, das ferner ein zweites Werkzeug umfasst, das im Wesentlichen gegenüber dem ersten Werkzeug angeordnet ist.

8. Werkzeugsystem (100) nach Anspruch 7, wobei das zweite Werkzeug im Wesentlichen das gleiche wie das erste Werkzeug ist.

9. Verfahren zur Fertigung eines Artikels, umfassend:
Platzieren eines in einem Werkzeug (100) zu formenden Materials mit einer Werkzeugoberfläche (104) zum Formen eines Artikels, wobei die Werkzeugoberfläche eine Vielzahl von Werkzeugzonen (106) und eine Vielzahl von Fluidströmungswegen umfasst, um den Strom eines Heiz-/Kühlfluids zu einzelnen Werkzeugzonen zu leiten;
Aktivieren von Heiz- und Kühleinrichtungen, die zumindest einigen der Werkzeugzonen zugeordnet sind, um die Werkzeugoberflächentemperatur jeder Werkzeugzone zu variieren;
**dadurch gekennzeichnet, dass**:
die Heiz- und Kühleinrichtungen ein Inline-Heizelement (114) zum Erwärmen von Fluid umfassen, das durch den jeweiligen Fluidströmungsweg strömt, wobei die Heizelemente unabhängig dem Strömungsweg von mindestens einigen der Werkzeugzonen (106) zugeordnet sind und;
das Verfahren den Schritt des aktiven Steuerns der Heiz- und Kühleinrichtungen (114) umfasst, um die Wärmeübertragung in den und aus dem Artikel in jeder Werkzeugzone (106) zu jedem bestimmten Zeitpunkt während des gesamten Formprozesses zu regulieren, wobei das Erwärmen durch selektives Aktivieren der Inline-Heizelemente gesteuert wird.

10. Verfahren nach Anspruch 9, ferner umfassend:
Erfassen einer Eigenschaft des Artikels in jeder Werkzeugzone und Erzeugen von Signalen, die die erfasste Eigenschaft in jeder Werkzeugzone anzeigen.

11. Verfahren nach Anspruch 10, wobei das Steuersystem die die Eigenschaft anzeigenden Signale empfängt und die Heiz- und Kühleinrichtungen als Reaktion auf das Signal steuert, um die Werkzeugzonen zu erwärmen oder zu kühlen.

12. Verfahren nach Anspruch 10 oder Anspruch 11, wobei die erfasste Eigenschaft eine der folgenden ist: Temperatur, Dielektrizitätskonstante und Härte.

13. Verfahren nach einem der Ansprüche 9 bis 12, umfassend das Regulieren der Wärmeübertragung in den und aus dem Artikel, um innerhalb einer vorbestimmten Toleranz spezifische Materialeigenschaften im fertigen Artikel zu erzeugen.

14. Verfahren nach Anspruch 13, wobei die spezifischen Materialeigenschaften des Artikels innerhalb spezifischer Werkzeugzonen (106) individuell gesteuert werden.

15. Verfahren nach einem der Ansprüche 9 bis 14, ferner umfassend das Bereitstellen eines Sensors (120) zum Erfassen einer Materialeigenschaft des Artikelmaterials vor Beginn des Formprozesses und zum Zuführen eines Signals, das diese Eigenschaft anzeigt, an die Steuerung vor Beginn des Formprozesses, und wobei der Regler die Steuerung der Heiz- und Kühleinrichtungen während des Formprozesses als Reaktion auf die vor Beginn des Formprozesses erfasste Materialeigenschaft modifiziert.

## Revendications

1. Système d'outil (100) pour mouler un article, le système comprenant :
un outil ayant une surface d'outil (104) pour former un article, la surface d'outil comprenant une pluralité de zones d'outils (106) ;
une pluralité de trajets d'écoulement de fluide pour diriger l'écoulement d'un fluide de chauffage/refroidissement vers des zones d'outils individuelles,
des moyens de chauffage et de refroidissement ; et
un moyen de commande (116) conçu pour commander les moyens de chauffage et de refroidissement,
**caractérisé en ce que** :
les moyens de chauffage et de refroidissement sont associés indépendamment à au moins certaines desdites zones d'outils et comprennent un élément chauffant en ligne (114) ;
et **en ce que** le moyen de commande (116) est conçu pour commander les moyens de chauffage et de refroidissement pour sélectivement :
chauffer individuellement les zones d'outils (106) en activant les éléments chauffants en ligne ; et
refroidir individuellement les zones d'outils (106) ;
pour réguler le transfert de chaleur à l'intérieur et à l'extérieur de l'article au niveau de chaque zone d'outil à un quelconque moment particulier tout au long du processus de moulage.

2. Système d'outil (100) selon la revendication 1, comprenant en outre une pluralité de capteurs (12) pour détecter une propriété de l'article dans les zones d'outils et pour produire des signaux indiquant ladite propriété au niveau de chaque zone d'outil.

3. Système d'outil (100) selon la revendication 2, dans lequel ledit système de commande a un moyen d'entrée (122) qui reçoit lesdits signaux indiquant ladite propriété et, sur la base desdits signaux, ledit système de commande commande les moyens de chauffage et de refroidissement en fonction de critères programmés pour chauffer ou refroidir lesdites zones d'outils.

4. Système d'outil (100) selon l'une quelconque des revendications 2 à 3, dans lequel les capteurs (120) détectent une propriété parmi : la température, la constante diélectrique, l'absorption/transmission ultrasonore, la contrainte et la dureté.

5. Système d'outillage (100) selon l'une quelconque des revendications précédentes, comprenant en outre une pluralité de vannes de commande normalement ouvertes (134) pour commander l'écoulement du fluide de chauffage/refroidissement vers les zones d'outils.

6. Système d'outillage (100) selon la revendication 5, dans lequel les vannes (134) sont des vannes de régulation de débit variable.

7. Système d'outillage (100) selon l'une quelconque des revendications précédentes, comprenant en outre un second outil agencé sensiblement à l'opposé du premier outil.

8. Système d'outillage (100) selon la revendication 7, dans lequel le second outil est sensiblement le même que le premier outil.

9. Procédé de fabrication d'un article comprenant :
le placement d'un matériau à mouler dans un outil (100) ayant une surface d'outil (104) pour former un article, la surface d'outil comprenant une pluralité de zones d'outils (106) et une pluralité de chemins d'écoulement de fluide pour diriger l'écoulement d'un fluide de chauffage/liquide de refroidissement vers des zones d'outils individuelles ;
l'activation de moyens de chauffage et de refroidissement associés à au moins certaines desdites zones d'outils de manière à modifier la température de surface d'outil de chaque zone d'outil ;
**caractérisé en ce que** :
les moyens de chauffage et de refroidissement comprennent un élément chauffant en ligne (114) pour chauffer le fluide traversant le trajet d'écoulement de fluide respectif, les éléments chauffants étant indépendamment associés au trajet d'écoulement d'au moins certaines desdites zones d'outils (106) et ;
le procédé comprend l'étape consistant à commander activement les moyens de chauffage et de refroidissement (114) pour réguler le transfert de chaleur à l'intérieur et à l'extérieur de l'article au niveau de chaque zone d'outil (106) à un quelconque moment particulier tout au long du processus de moulage, le chauffage étant commandé par activation sélective des éléments chauffants en ligne.

10. Procédé selon la revendication 9, comprenant en outre :
la détection d'une propriété de l'article au niveau de chaque zone d'outil et la production de signaux indiquant ladite propriété détectée au niveau de chaque zone d'outil.

11. Procédé selon la revendication 10, dans lequel ledit système de commande reçoit lesdits signaux indiquant ladite propriété et commande les moyens de chauffage et de refroidissement en réponse audit signal pour chauffer ou refroidir lesdites zones d'outil.

12. Procédé selon la revendication 10 ou la revendication 11, dans lequel la propriété détectée est l'une parmi : la température, la constante diélectrique et la dureté.

13. Procédé selon l'une quelconque des revendications 9 à 12, comprenant la régulation du transfert de chaleur à l'intérieur et à l'extérieur de l'article pour produire, dans une tolérance prédéterminée, des propriétés de matériau spécifiques dans l'article fini.

14. Procédé selon la revendication 13, dans lequel les propriétés de matériau spécifiques de l'article sont commandées individuellement dans des zones d'outils spécifiques (106).

15. Procédé selon l'une quelconque des revendications 9 à 14, comprenant en outre la fourniture d'un capteur (120) pour détecter une propriété de matériau dudit matériau d'article avant le début du processus de moulage et la fourniture d'un signal indiquant ladite propriété audit organe de commande avant le début de le processus de moulage et dans lequel l'organe de commande modifie la commande desdits moyens de chauffage et de refroidissement pendant le processus de moulage en réponse à ladite propriété de matériau détectée avant le début du processus de moulage.
